# EUROPÄISCHE PATENTSCHRIFT

(11) **EP 1 334 775 B1**
(45) Veröffentlichungstag und Bekanntmachung des Hinweises auf die Patenterteilung: **27.04.2005**
(21) Anmeldenummer: 03002168.7
(22) Anmeldetag: 03.02.2003
(51) Int. Cl.: B05B 13/04, B05B 5/08, B25J 17/00, B25J 9/04, B25J 17/02

(54) **Beschichtungsmaschine mit einem Zerstäuber und einem Drehgelenk**
Coating device with sprayer and wrist mechanism
Dispositif de revêtement avec pulvérisateur et mécanisme de poignet

(30) Priorität: 11.02.2002 DE 10205593
(43) Veröffentlichungstag der Anmeldung: 13.08.2003
(73) Patentinhaber: Dürr Systems GmbH, 70435 Stuttgart (DE)
(72) Erfinder: Haas, Jürgen, 75438 Knittlingen (DE); Hezel, Thomas, 71679 Asperg (DE); Herre, Frank, 71739 Oberriexingen (DE)
(74) Vertreter: Heusler, Wolfgang, Dipl.-Ing.

(56) Entgegenhaltungen:
- EP-A- 0 169 419
- DE-A- 3 601 456
- US-A- 4 499 784
- US-A- 4 703 668

## Beschreibung

Die Erfindung betrifft eine Beschichtungsmaschine für die elektrostatische Serienbeschichtung von Werkstücken gemäß dem Oberbegriff des Anspruchs 1.

Beispielsweise handelt es sich um Lackierroboter oder andere programmgesteuerte mehrachsige Bewegungsmaschinen für die automatische Beschichtung von Fahrzeugkarossen insbesondere mit Rotationszerstäubern oder evtl. auch mit elektrostatisch unterstützten Luftzerstäubern, die zur genauen Bahnnachführung an einem als Handachse bezeichneten Drehgelenk mit einer oder mehr (in der Praxis bis zu vier) ebenfalls "Achsen" genannten Bewegungsrichtungen mit entsprechenden Antrieben montiert sind. Die Elemente der Antriebsmechanik wie Zahnräder, Ringe, Scheiben, Lager usw. lassen den zum Durchführen des Hochspannungskabels und der zu dem Zerstäuber führenden Versorgungsschläuche für Beschichtungsmaterial, Lösemittel und Druckluft und sonstige Leitungen erforderlichen großen Innenkanal frei (DE 36 01 456, DE 36 30 190) und bestehen in der Regel aus für die mechanische Belastung geeignetem Metall, sind also elektrisch leitend und sollen u.a. aus Sicherheitsgründen auf einem definierten elektrischen Potential liegen. Der Zerstäuber hat ein Gehäuse aus Isolierwerkstoff, an dessen Stirnende der in der Regel metallische Glockenteller oder sonstige Sprühkopf gelagert ist. Zwischen dem Zerstäuber und der Handachse kann ein Distanz- oder Adapterkörper aus Isolierwerkstoff mit ggf. gegeneinander abgewinkelten Befestigungsflanschen angeordnet sein.

Das in der oben erwähnten DE 36 01 456 A beschriebene Handgelenk enthält auf seiner Innenseite zwei aus Kunststoff bestehende Führungsteile, die entsprechend den relativ zueinander drehbaren Gliedern des Handgelenks gegen einander verdrehbar sind. Diese Kunststoffführungsteile dienen zur Festlegung des Krümmungsradius an der Innenseite des Gelenkmechanismus sowie zur Aufnahme des Schmiermittels für die Zahnräder und sollen für eine glatte Oberfläche sorgen, auf der Schläuche und Kabel gleiten können.

Bei der elektrostatischen Beschichtung mit derartigen Maschinen besteht das Problem der Isolation auf Hochspannung in der Größenordnung von 100 kV liegender Elemente von geerdeten Maschinenteilen oder von den zu beschichtenden Werkstücken.

Wenn z.B. leitfähiges Beschichtungsmaterial wie Wasserlack direkt durch den Sprühkkopf aufgeladen, die Handachse der Lackiermaschine aber geerdet werden soll, muss zwischen der Handachse und dem auf Hochspannung liegenden Sprühkopf, im Fall eines Rotationszerstäubers also der Absprühkante des Glockentellers ein Luftisolationsabstand eingehalten werden, der zwischen leitfähigen Metallteilen typisch etwa 400 mm beträgt. Selbst bei Einhalten dieses Abstands besteht die Gefahr einer leitenden Verbindung durch Kriechströme über die Außenflächen des Zerstäubers und ggf. des Distanz- und Adapterkörpers. Die Zerstäuber- und Handachsenanordnung der bekannten Maschinen ist dadurch unerwünscht sperrig, was u.a. bei der Beschichtung enger Werkstückbereiche und insbesondere bei der Beschichtung von Innenräumen des Werkstücks hinderlich ist. Ein weiteres Problem besteht bei Direktaufladung und geerdeter Handachse darin, dass wegen der erforderlichen Hochspannungsisolation die hindurchgeführten, durch den Sprühkopf auf Hochspannung aufgeladenen Medienschläuche so dick und steif ausgeführt werden müssen, dass sie einerseits nicht ohne Weiteres durch die Handachse passen und andererseits die in der Praxis unvermeidbaren dynamischen Biegebelastungen allenfalls kurzzeitig aushalten. Wegen dieser Schwierigkeiten werden bisher für leitfähiges Beschichtungsmaterial Zerstäuber mit sperrigen Außenelektroden bevorzugt (EP 0 283 918, EP 0 767 005 usw.), deren Versorgungsschläuche geerdet sein können, während für die Beschichtung enger Innenräume die weniger sperrigen Luftzerstäuber eingesetzt werden, bei denen die Isolationsprobleme der Elektrostatikzerstäuber nicht auftreten.

Ohne Hochspannungsisolation zwischen einem elektrostatischen Zerstäuber mit Direktaufladung und der Handachse der Beschichtungsmaschine kommt man aus, wenn auch die Metallteile der Handachse durch leitende Verbindung mit dem Zerstäuber auf Hochspannung gelegt werden. Ein bekannter Lackierroboter (EP 0 796 664) hat deshalb einen isolierenden Lackierarm zwischen der mit dem Zerstäuber auf Hochspannung gelegten Handachse und dem geerdeten metallischen Armgehäuse, in dem die Antriebsmotoren der Handachse untergebracht sein können. Zur Potentialtrennung zwischen dem Zerstäuber und dem geerdeten Versorgungssystem für leitfähiges Beschichtungsmaterial arbeitet diese bekannte Lackiermaschine mit kartuschenartigen Farbbehältern, die auswechselbar in den isolierenden Lackierarm eingesetzt werden. Hier ist keine besondere Isolation zwischen dem Handgelenk und dem Zerstäuber und der ebenfalls auf Hochspannung gelegten Farbversorgungsleitung erforderlich. Für die Lackierung von Innenräumen und sonstigen beengten Werkstückbereichen sind aber Beschichtungsmaschinen mit auf Hochspannung liegendem Handgelenk in der Regel noch weniger geeignet, weil stets der erwähnte große Luftisolationsabstand der Metallteile des Handgelenks von dem geerdeten Werkstück eingehalten werden muss, wenn es nicht zu Überschlägen bzw. zu häufigen Betriebsunterbrechungen durch die vor einem Überschlag automatisch wirksam werdende Sicherheitsabschaltung kommen soll.

Der Erfindung liegt die Aufgabe zugrunde, eine Beschichtungsmaschine mit einem vorzugsweise kleinen und daher auch für die Beschichtung von engen Bereichen oder Innenräumen der Werkstücke geeigneten Elektrostatikzerstäuber und mit einer Handachse oder einem sonstigen Drehgelenk anzugeben, dessen Abstände sowohl von den auf Hochspannung liegenden Teilen des Zerstäubers als auch von den zu beschichtenden Werkstücken klein sein können.

Diese Aufgabe wird durch die in den Patentansprüchen angegebenen Merkmale gelöst.

Die Erfindung ist sowohl für Maschinen mit einer hier als typisches Beispiel eines Drehgelenks betrachteten Handachse vorteilhaft, deren in der Regel metallische Mechanik auf das Hochspannungspotential des Zerstäubers gelegt wird, als auch für Maschinen mit geerdeter Handachse. Wenn die Handachse elektrisch leitend mit den auf Hochspannung liegenden Elementen des Zerstäubers verbunden ist, ist zwischen ihnen kein Isolierabstand erforderlich, so dass eine in dieser Hinsicht beliebig kleine Gesamtanordnung gewählt werden kann. Dennoch kann die Handachse andererseits durch die isolierende Hülle auf ihrer Außenseite so gut nach außen abgeschirmt werden, dass sie sich während der Beschichtung dem geerdeten Werkstück beliebig annähern kann, ohne den bei oder vor einem Kurzschluss sonst auftretenden starken Stromanstieg auszulösen, bei dem automatisch die Hochspannung abgeschaltet und der Betrieb unterbrochen wird.

Wenn dagegen die metallischen Bestandteile der Handachse geerdet werden sollen, so dass sie nicht gegen die Werkstücke isoliert werden müssen, erlaubt die isolierende Hülle auf der Innenseite der Handachsenmechanik das Hindurchführen dünner und für die ständigen starken Biegebelastungen geeigneter Versorgungsschläuche für die unter Hochspannung stehenden Beschichtungs- und ggf. Spülmedien ohne die Gefahr von Spannungsüberschlägen. Wenn sich auch in diesem Fall eine isolierende Hülle auf der Außenseite der Handachse erstreckt, kann die Handachse dadurch ohne Isolationsproblem einen in dieser Hinsicht beliebig kleinen Abstand z.B. von dem Glockenteller oder sonstigen Elektroden des Zerstäubers haben, da nicht nur der bisher erforderliche Mindestluftabstand von annähernd 400 mm entfällt, sondern auch die Gefahr von in die Handachse führenden Kriechstromwegen längs der Außenflächen der Zerstäuberanordnung.

Die isolierende Hülle soll sich in der Regel von dem an die Handachse angrenzenden isolierenden Gehäuseteil des Zerstäubers bis zu dem isolierenden Maschinenarm durchgehend erstrecken. Sie muss nicht ein von der eigentlichen Handachse gesondertes Element wie z.B. eine separate Außen- bzw. Innenhülle sein, sondern kann auch durch das aus Isolierwerkstoff bestehende Gehäuse der Handachse selbst gebildet sein. Es ist auch denkbar, dass die gesamte Handachse einschließlich der Getriebemechanik aus Isolierwerkstoff besteht. Als Werkstoff kommt u.a. auch Keramik in Betracht.

An den durch die einzelnen Achsen der Handachse gebildeten Schnittstellen, an denen die Glieder der Handachse und dementsprechend auch die Abschnitte der Isolierhülle relativ zueinander und ggf. relativ zu dem Zerstäuber oder dem Maschinenarm drehbar sind, bestehen zwischen ihnen mehr oder weniger breite Luftspalte, die selbst bei vollständig aus Isolierwerkstoff bestehender Handachse zu Problemen führen könnten. Optimale Hochspannungsisolation durch die Isolierhülle wird vor allem dann erreicht, wenn an diesen Schnittstellen gut isolierende und hochspannungssichere Dichtungen vorgesehen sind. Vorzugsweise wird in Weiterbildung der Erfindung in die an die Dichtungsstellen der Hülle bzw. des (ggf. die Hülle bildenden) Gehäuses der Handachse angrenzenden Spalte zwischen den benachbarten relativ zueinander drehbaren Bestandteilen des Handgelenks ein fließfähiges, beispielsweise flüssiges oder gasförmiges Isoliermedium eingefüllt. Dadurch werden Ströme innerhalb des Handgelenks zwischen benachbarten, ggf. elektrisch leitfähigen Bauteilen verhindert.

Die durch die Erfindung ermöglichte kompakte Bauweise der Zerstäuber- und Gelenkanordnung hat vor allem den Vorteil, dass die jeweils erforderlichen Lackierbahnen direkt und im Rahmen des normalen Bewegungsprogramms auch an bisher nicht erreichbaren Bereichen namentlich von Fahrzeugkarossen erzeugt werden können. Ausreichender Abstand muss nur noch zwischen dem Sprühkopf bzw. eventuell vorhandener Elektroden des Zerstäubers und dem Werkstück eingehalten werden. Außerdem wird durch die kompakte Bauweise die dynamische Bewegbarkeit des Zerstäubers verbessert.

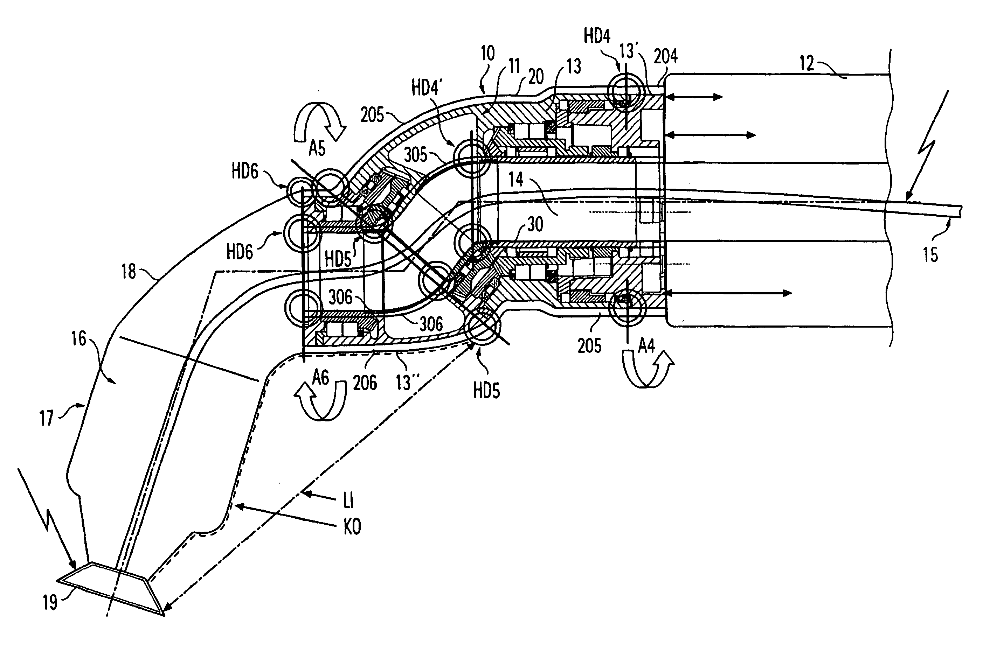

An dem in der Zeichnung weitgehend schematisch dargestellten Beispiel eines an der Handachse eines Lackierroboters montierten Rotationszerstäubers für Direktaufladung des Beschichtungsmaterials wird die Erfindung näher erläutert.

Die Handachse 10 für den Rotationszerstäuber 16 ist an dem bewegbaren isolierenden Lackierarm 12 angebracht und hat die bei Lackierrobotern üblichen drei Achsen A4, A5 und A6, die in bekannter Weise über Hohlwellen von am anderen Ende des Lackierarms 12 in einem geerdeten Antriebsgehäuse (nicht dargestellt) befindlichen Motoren angetrieben werden. Die Antriebsmechanik 11 der Handachse kann ebenfalls in an sich bekannter Weise konstruiert sein und enthält die üblichen metallischen Bestandteile wie Zahnräder, Lager, Ringkörper usw., die hier nicht im Einzelnen beschrieben werden müssen und gemäß einer ersten Möglichkeit auf die Hochspannung des Zerstäubers gelegt werden. Anzahl und Größe der Metallteile sollen vorzugsweise so gering wie möglich sein, u.a. um die elektrische Kapazität der Handachse und damit zusammenhängende Lade- und Entladezeiten beim Ein- und Ausschalten der Hochspannung zu verringern, wenn die Handachse 10 auf Hochspannung gelegt wird. Die übrigen Teile der Handachse sollen aus Isolierwerkstoff wie Kunststoff oder Keramik bestehen, insbesondere den Außenumfang bildende Teile wie z.B. die relativ zueinander drehbaren Schalenteile 13, 13' und 13''. Die Bestandteile der Antriebsmechanik könnten auch aus elektrisch leitendem oder isolierendem nichtmetallischen Werkstoff bestehen. Der im Wesentlichen zylindrische Innenraum innerhalb der Antriebsmechanik 11 bildet den zentralen Durchführungskanal 14 für die schematisch dargestellte Hochspannungsleitung 15 des Zerstäubers und für dessen Versorgungsschläuche und sonstigen Leitungen (nicht dargestellt).

Der elektrostatische Rotationszerstäuber 16 hat ein Außengehäuse 17 aus Isolierwerkstoff (beispielsweise PTFE) und kann an dem an der Achse A5 vorgesehenen Montageflansch der Handachse 10 über ein ebenfalls aus Isolierwerkstoff bestehendes Zwischenkörper 18 z.B. der dargestellten abgewinkelten Form montiert sein, in dem beispielsweise Ventile zur Steuerung des Zerstäubers untergebracht sein können. Am Stirnende des Außengehäuses 17 ist die mit der Hochspannungsleitung 15 verbundene Zerstäuberglocke 19 dargestellt, an deren Umfang das von ihr aufgeladene Beschichtungsmaterial abgesprüht wird.

Von den bekannten Anordnungen der insoweit erläuterten Art unterscheidet sich die erfindungsgemäße Anordnung zunächst dadurch, dass, sich zwischen dem isolierenden Zwischenkörper 18 des Zerstäubers 16 und dem isolierenden Lackierarm 12 über die gesamte Außenseite der Handachse 10 eine deren Antriebsmechanik 11 umschließende Außenhülle 20 aus Isolierwerkstoff erstreckt.

An den Schnittstellen, an denen sich an der Außenseite befindliche Elemente der Handachsenkonstruktion relativ zueinander drehen können, im betrachteten Fall an den Achsen A4 und A5, hat auch die Außenhülle 20 entsprechende gegeneinander verdrehbare Abschnitte, die mit 204, 205 und 206 bezeichnet sind. Ähnlich ist von den beiden axial äußeren Abschnitten der Abschnitt 206 an der Achse A6 auch relativ zu dem Zwischenkörper 18 drehbar, während der Abschnitt 204 fest mit der angrenzenden Außenfläche des Lackierarms 12 verbunden sein kann.

Bei dem dargestellten Ausführungsbeispiel erstreckt sich zwischen dem Körper 18 und dem Isolierarm 12 eine zweite Hülle 30 aus Isolierwerkstoff als Innenhülle über die gesamte Innenseite der Antriebsmechanik 11 der Handachse. Notwendig ist diese den Durchführungskanal 14 und die darin verlegten Schläuche, Leitungen und Kabel umschließende Innenhülle 30 nur dann, wenn die Handachse nicht auf Hochspannung gelegt, sondern gemäß einer Alternativmöglichkeit während des Beschichtungsbetriebs geerdet wird. Ähnlich wie die Außenhülle 20 hat auch die Innenhülle 30 an den jeweiligen Schnittstellen gegeneinander verdrehbare Abschnitte 304, 305 und 306, wobei der Abschnitt 306 auch relativ zu dem Zwischenkörper 18 drehbar ist, der Abschnitt 304 dagegen fest mit dem Lackierarm 12 verbunden sein kann.

Zweckmäßig ist auch bei geerdeter Handachse die Außenhülle 20 vorhanden. Sie isoliert in diesem Fall die Handachse nicht gegen das zu beschichtende Werkstück, sondern gegen den Zerstäuber 16. Bei dem betrachteten Beispiel sind sowohl der durch den gestrichelten Doppelpfeil LI dargestellte direkte (geradlinige) Luftisolationsabstand zwischen der Absprühkante der Zerstäuberglocke 19 und der Antriebsmechanik 11 als auch der gestrichelt dargestellte Oberflächenweg KO für Kriechströme im Gegensatz zu den bisher bekannten und üblichen elektrostatischen Beschichtungsmaschinen unkritisch.

Je nach Anwendungsfall der Erfindung kann es zweckmäßig oder notwendig sein, möglichst weitgehend Luftspalte zwischen den benachbarten Abschnitten der Hüllen und zwischen den Hüllen (vor allem der Außenhülle) und dem Zwischenkörper 18 bzw. dem Lackierarm 12 zu vermeiden. An den aufgrund der Achsen A4, A5 und A6 gebildeten Schnittstellen, also zwischen allen relativ zueinander verdrehbaren Abschnitten und zwischen den Abschnitten 206, 306 und dem Außenkörper 18 sind die Hüllen 20 und 30 daher jeweils mit einer hochspannungssicheren gleitfähigen ringförmigen Bewegungs- oder Drehdichtung versehen, die in der Zeichnung schematisch durch die Kreise HD angedeutet sind. Bei dem dargestellten Beispiel sind an der Achse A6 die beiden Dichtungen HD6 zwischen dem isolierenden Körper 18 und dem Abschnitt 206 der Außenhülle 20 bzw. dem Abschnitt 306 der Innenhülle 30 erkennbar, an der Achse A5 die beiden Dichtungen HD5 zwischen den Abschnitten 206 und 205 bzw. 306 und 305 und an der Achse A4 die Dichtung HD4 der Außenhülle 20 sowie die Dichtung HD4' der Innenhülle 30. Aufgrund der als Beispiel gewählten Handachsenkonstruktion ist die Dichtung HD4' gegen die äußere Dichtung HD4 axial in Richtung zum Zerstäuber versetzt, da erst an dieser Stelle eine Relativdrehung zwischen dem Abschnitt 305 und dem an den Lackierarm 12 angrenzenden Abschnitt 304 der Innenhülle erfolgt. Die feste Verbindung zwischen dem Abschnitt 204 und dem Lackierarm 12 ist ebenfalls dicht und spaltfrei.

Die Abschnitte der beiden Isolierhüllen 20 und 30 sollen in sich möglichst homogen und spaltfrei sein. Darüber hinaus soll zumindest die Außenhülle 20 auch möglichst dicht und spaltfrei mit den angrenzenden Oberflächen der Handachsenkonstruktion wie z.B. mit den Schalenteilen 13, 13', 13''' verbunden sein. Beispielsweise kann die Verbindung durch hochspannungsdichte Kunststoffverschweißung erreicht werden oder durch Aufbringung der Außenhülle 20 durch ein Beschichtungsverfahren. Es besteht aber auch die Möglichkeit, die Hüllenabschnitte als mit angrenzenden Teilen der Handachse einstückige Gehäusekörper zu formen.

Weniger wichtig ist gewöhnlich eine spaltfreie Verbindung der Innenhüllenabschnitte mit den sie umgebenden Teilen der Handachse. Deshalb kann z.B. als Abschnitt 304 einfach ein Kunststoffrohr mit radialem Spiel gegenüber dem angrenzenden (metallischen) Antriebselement der Handachse in den Durchführungskanal 14 geschoben werden.

In die an den Schnittstellen an die Dichtungen HD der Hüllen angrenzenden unvermeidbaren inneren Spalte zwischen den relativ zueinander bewegbaren Elementen der Handachse ist dagegen gemäß einem besonders bevorzugten Merkmal der Erfindung eine isolierende Flüssigkeit (oder ein anderes fließfähiges Isoliermedium) eingefüllt, wobei die Spaltbereiche auf den Außen- und Innenseiten der Antriebsmechanik 11 durch je eine Dichtung HD geschlossen sind, soweit die Abdichtung nicht schon durch die Handachsenkonstruktion selbst gegeben ist. In Weiterbildung dieses Merkmals kann das Isoliermedium zugleich die Funktion des erforderlichen Schmierstoffs für die Zahnräder oder sonstigen Getriebeelemente der Antriebsmechanik 11 übernehmen. Anders gesagt kann das Schmieröl des Getriebes zur Hochspannungsisolation dienen, wenn es alle für die Hochspannungsisolation kritischen Hohlräume ausfüllt.

In manchen Fällen wie z.B. bei der Fahrzeuglackierung kann es erforderlich sein, als Isoliermedium eine für den Lack unschädliche Substanz zu verwenden, um Lackfehler auf zu beschichtenden oder schon beschichteten Bereichen zu vermeiden, wenn Isolierflüssigkeit bei Dichtungsschäden aus der Handachse austritt. Lackverträgliche Isolierflüssigkeiten, bei denen es sich auch um Bestandteile des Beschichtungsmaterials selbst handeln kann, sind an sich bekannt und werden u.a. als Schiebemedium in mit Molchtechnik arbeitenden Versorgungssystemen von Beschichtungsanlagen verwendet.

Die bei Direktaufladung eines leitenden Beschichtungsmaterials ebenfalls erforderliche Potentialtrennung zwischen dem Zerstäuber und seinem geerdeten Versorgungssystem kann durch beliebige bekannte Systeme erreicht werden einschließlich des schon erwähnten Kartuschensystems (EP 0 796 664) oder der modernen Molchsysteme (DE 101 57 966, DE 100 33 987). Die Erfindung kann aber auch für Zerstäuber mit Außenaufladung sinnvoll sein, insbesondere bei kleinen und kompakten Ausführungsformen mit unmittelbar an oder in dem Außengehäuse des Zerstäubers angeordneten Aufladeelektroden (DE 102 02 711), deren Hochspannungskabel ebenfalls durch die Handachse der Beschichtungsmaschine geführt wird.

## Patentansprüche

1. Beschichtungsmaschine für die elektrostatische Serienbeschichtung von Werkstücken
mit einem Zerstäuber (16), der zur Aufladung des von ihm abgesprühten Beschichtungsmaterials an eine Hochspannungsleitung (15) angeschlossen ist,
und mit einem den Zerstäuber (16) mit einem bewegbaren Maschinenarm (12) verbindenden Drehgelenk (10), dessen Glieder von einem in dem Gelenk befindlichen Antriebsmechanismus (11) relativ zueinander drehbar sind und einen Hohlraum (14) für die zu dem Zerstäuber führenden Leitungen bilden,
**dadurch gekennzeichnet, dass** sich zwischen dem Zerstäuber (16) und dem Maschinenarm (12) längs des Drehgelenks (10) eine für die Hochspannung des Zerstäubers isolierende Hülle (20, 30) erstreckt,
die entsprechend den relativ zueinander drehbaren Gliedern des Drehgelenks (10) gegeneinander verdrehbare Abschnitte (204-306) hat.

2. Beschichtungsmaschine nach Anspruch 1, **dadurch gekennzeichnet, dass** an der Schnittstelle zwischen den gegeneinander verdrehbaren Abschnitten (204-306) der Hülle ( 20, 30) und/oder zwischen der Hülle und dem Zerstäuber (16) eine für die Hochspannung isolierende Dichtung (HD) vorgesehen ist.

3. Beschichtungsmaschine nach Anspruch 2, **dadurch gekennzeichnet, dass** in den an die Hülle (20, 30) oder an deren Dichtung (HD) angrenzenden Spalt zwischen benachbarten relativ zueinander drehbaren Bestandteilen des Gelenks (10) eine isolierende Flüssigkeit oder ein anderes fließfähiges Isoliermedium eingefüllt ist.

4. Beschichtungsmaschine nach Anspruch 3, **dadurch gekennzeichnet, dass** isolierender Schmierstoff der Getriebeelemente des Antriebsmechanismus (11) den an die Hülle (20, 30) oder deren Dichtung (HD) angrenzenden Spalt ausfüllt.

5. Beschichtungsmaschine nach Anspruch 3 oder 4, **dadurch gekennzeichnet, dass** das Isoliermedium eine für das Beschichtungsmaterial unschädliche Substanz ist.

6. Beschichtungsmaschine nach einem der vorangehenden Ansprüche, **dadurch gekennzeichnet, dass** die elektrisch leitfähigen Bestandteile des Gelenks (10) und/oder seines Antriebsmechanismus (11) an eine Hochspannungsleitung (15) angeschlossen oder anschließbar sind,
und dass sich die isolierende Hülle (20) auf der Außenseite des Gelenks (10) die leitfähigen Bestandteile umschließend von dem isolierend ausgebildeten Maschinenarm (12) zu dem Zerstäuber (16, 18) erstreckt.

7. Beschichtungsmaschine nach einem der Ansprüche 1 bis 5, **dadurch gekennzeichnet, dass** die elektrisch leitfähigen Bestandteile des Gelenks (10) und/oder seines Antriebsmechanismus geerdet sind,
und dass die isolierende Hülle (30) innerhalb der leitfähigen Bestandteile die durch den Hohlraum (14) verlaufenden Leitungen des Zerstäubers (16) umschließt.

8. Beschichtungsmaschine nach einem der vorangehenden Ansprüche, **dadurch gekennzeichnet, dass** sich sowohl auf der Außenseite des Gelenks (10) als auch innerhalb seiner leitfähigen Bestandteile je eine isolierende Hülle (20, 30) erstreckt.

9. Beschichtungsmaschine nach einem der vorangehenden Ansprüche, **dadurch gekennzeichnet, dass** die isolierende Hülle durch das Gehäuse des Gelenks gebildet ist.

## Claims

1. Coating machine for the electrostatic series coating of workpieces, with an atomiser (16) which for charging of the coating material which it sprays is connected to a high-voltage line (15), and with a swivel joint (10) which connects the atomiser (16) to a movable machine arm (12), wherein the elements of the said swivel joint are rotatable relative to one another by a drive mechanism (11) located in the joint and form a cavity (14) for the lines leading to the atomiser, **characterised in that** a cover (20, 30) which insulates against the high voltage of the atomiser extends along the swivel joint between the atomiser (16) and the machine arm (12) and has portions (204-306) which are rotatable relative to one another corresponding to the elements of the swivel joint (10) which are rotatable relative to one another.

2. Coating machine as claimed in Claim 1, **characterised in that** a seal (HD) is provided at the interface between the portions (204-306) of the cover (20, 30) which are rotatable relative to one another and/or between the cover and the atomiser (16).

3. Coating machine as claimed in Claim 2, **characterised in that** an insulating fluid or another flowable insulating medium is filled into the gap adjoining the cover (20, 30) or the seal (HD) thereof between adjacent components of the joint (10) which are rotatable relative to one another.

4. Coating machine as claimed in Claim 3, **characterised in that** insulating lubricant for the gear elements of the drive mechanism (11) fills the gap adjoining the cover (20, 30) or the seal (HD) thereof.

5. Coating machine as claimed in Claim 3 or 4, **characterised in that** the insulating medium is a substance which is harmless for the coating material.

6. Coating machine as claimed in any one of the preceding claims, **characterised in that** the electrically conductive components of the joint (10) and/or of the drive mechanism (11) thereof are or can be connected to a high-voltage line (15), and that the insulating cover (20) extends from the insulating machine arm (12) to the atomiser (16, 18) on the outside of the joint (10) and surrounds the conductive components.

7. Coating machine as claimed in any one of Claims 1 to 5, **characterised in that** the electrically conductive components of the joint (10) and/or of the drive mechanism thereof are earthed, and that within the conductive components the insulating cover (30) surrounds the lines of the atomiser (16) which extend through the cavity (14).

8. Coating machine as claimed in any one of the preceding claims, **characterised in that** in each case an insulating cover (20, 30) extends both on the outside of the joint (10) and also within the conductive components thereof.

9. Coating machine as claimed in any one of the preceding claims, **characterised in that** the insulating cover is formed by the housing of the joint.

## Revendications

1. Machine de revêtement pour le revêtement électrostatique en série de pièces, comportant un pulvérisateur (16) qui est raccordé à une ligne haute tension ( 15) pour charger le matériau de revêtement pulvérisé par celui-ci, et comportant une articulation tournante (10) reliant le pulvérisateur (16) à un bras de machine (12) déplaçable, articulation dont les éléments peuvent être mis en rotation les uns par rapport aux autres par un mécanisme d'entraînement (11) se trouvant dans l'articulation, et qui forment une cavité (14) pour les lignes menant au pulvérisateur, **caractérisée en ce que**, entre le pulvérisateur (16) et le bras de machine (12), le long de l'articulation tournante (10), s'étend une gaine (20, 30) isolante pour la haute tension du pulvérisateur, qui possède des sections (204-306) pouvant tourner les unes par rapport aux autres en fonction des éléments de l'articulation tournante (10), tournant les uns par rapport aux autres.

2. Machine de revêtement selon la revendication 1, **caractérisée en ce qu'**il est prévu à l'interface entre les sections (204-306), pouvant tourner les unes par rapport aux autres, de la gaine (20, 30) et/ ou entre la gaine et le pulvérisateur (16), une garniture d'étanchéité HD isolante pour la haute tension.

3. Machine de revêtement selon la revendication 2, **caractérisée en ce que** dans la fente, adjacente à la gaine (20, 30) ou à sa garniture d'étanchéité HD, un liquide isolant ou un autre milieu isolant coulant est introduit entre des parties constitutives voisines, pouvant tourner les unes par rapport aux autres, de l'articulation (10).

4. Machine de revêtement selon la revendication 3, **caractérisée en ce qu'**un lubrifiant isolant des éléments de transmission du mécanisme d'entraînement (11) remplit la fente adjacente à la gaine (20, 30) ou à sa garniture d'étanchéité HD.

5. Machine de revêtement selon la revendication 3 ou 4, **caractérisée en ce que** le milieu isolant est une substance non nocive pour le matériau de revêtement.

6. Machine de revêtement selon l'une des revendications précédentes, **caractérisée en ce que** les parties constitutives électriquement conductrices de l'articulation (10) et/ou de son mécanisme d'entraînement (11) sont raccordées ou peuvent être raccordées à une ligne haute tension (15), et **en ce que** la gaine isolante (20) s'étend, sur le côté extérieur de l'articulation (10), en enfermant les parties constitutives conductrices, depuis le bras de machine (12) réalisé isolant vers le pulvérisateur (16, 18).

7. Machine de revêtement selon l'une des revendications 1 à 5, **caractérisée en ce que** les parties constitutives électriquement conductrices de l'articulation (10) et/ou de son mécanisme d'entraînement sont mises à la terre, et **en ce que** la gaine isolante (30) enferme, à l'intérieur des parties constitutives conductrices, les lignes du pulvérisateur (16) s'étendant à travers la cavité (14).

8. Machine de revêtement selon l'une des revendications précédentes, **caractérisée en ce qu'**une gaine isolante (20, 30) respective s'étend aussi bien sur le côté extérieur de l'articulation (10) qu'à l'intérieur de ses parties constitutives conductrices.

9. Machine de revêtement selon l'une des revendications précédentes, **caractérisée en ce que** la gaine isolante est formée par le boîtier de l'articulation.
